Europäisches Patentamt

European Patent Office

Office européen des brevets

(19)

(11) Publication number: **0 113 089**
**A1**

(12)

# EUROPEAN PATENT APPLICATION

(21) Application number: **83112663.6**

(22) Date of filing: **15.12.83**

(51) Int. Cl.³: **G 03 B 15/05**
**G 03 B 17/02**

(30) Priority: **22.12.82 JP 199189/82 U**

(43) Date of publication of application:
**11.07.84 Bulletin 84/28**

(84) Designated Contracting States:
**DE FR GB**

(71) Applicant: **KONISHIROKU PHOTO INDUSTRY CO. LTD.**
**No. 26-2, Nishishinjuku 1-chome Shinjuku-ku**
**Tokyo 160(JP)**

(72) Inventor: **Sawano, Hiroshi**
**No. 2-9-12, Miyamoto-Cho**
**Tokorozawa-Shi Saitama(JP)**

(74) Representative: **Patentanwälte Henkel, Pfenning, Feiler,**
**Hänzel & Meinig**
**Möhlstrasse 37**
**D-8000 München 80(DE)**

(54) **Disc camera.**

(57) A disc camera in which a cartridge pocket for accommodating a disc film cartridge (FC) is disposed on the left side of the camera as viewed from the front of the camera so that an exposure window is allowed to be located at the right end as viewed from the direction. A flashlight unit (21), (31), (41), (53) and a capacitor (22), (32) for flashing are arrayed on the right side of the cartridge pocket in parallel therewith in a plane. The capacitor (22), (32), is disposed under the flashlight unit (21), (31), (41), (53). The flashlight unit is allowed to move in a horizontal direction, a vertical direction or slantly. The flashlight unit (21), (31), (41), (53) is provided in a movable lens-protecting member (42a) which is at least capable of covering the lens (43a).

EP 0 113 089 A1

Croydon Printing Company Ltd.

# DISC CAMERA

This invention relates to improvements in a small disc camera which takes pictures by loading a disc film cartridge that accommodates a disc film, the camera being so thin as can be easily carried.

A disc film is contained in a disc film cartridge which will be loaded into a disc camera. The disc film cartridge assumes the shape of a thin plate having an exposure window at the right end portion thereof as viewed from the front side. The disc film in the disc film cartridge is rotated by a predetermined angle after the shot of each frame. Fifteen frames can be shot through a photographic lens of the camera positioned just in front of the exposure window.

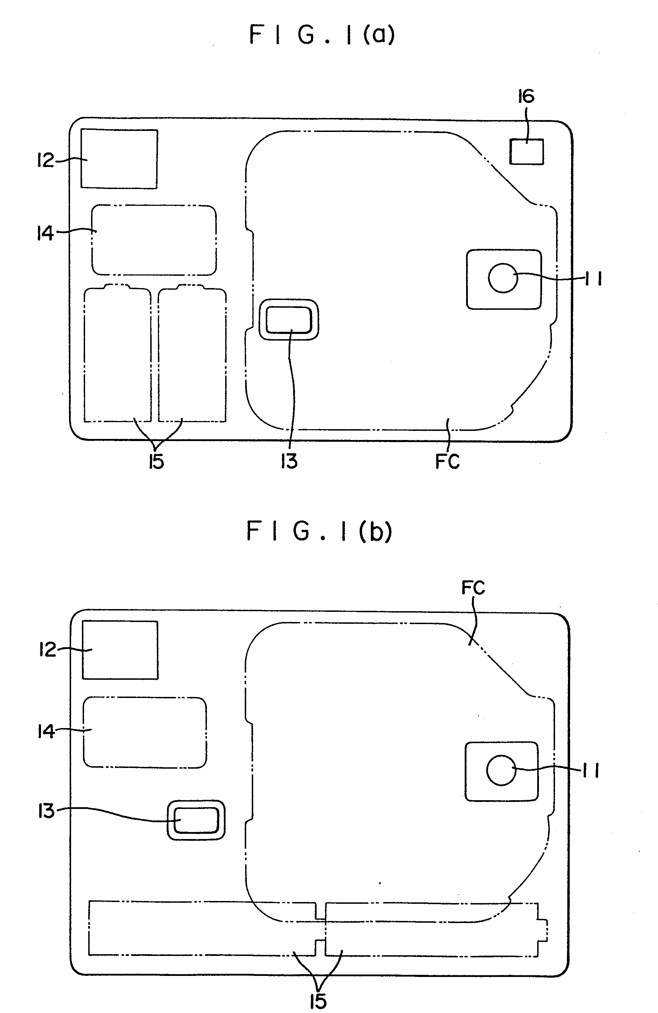

Disc cameras which are now disclosed are as shown in Figs. 1(a) and 1(b) as viewed from the front side of the cameras. A photographic lens 11 is located at a central portion near the right end of the camera as viewed from the front side, and a disc film cartridge FC with exposure window is loaded at the back of the photographic lens 11. A flashlight unit 12 is located on the upper left side in the front surface of the camera, and a shutter release button 13 of the type of push button is located on the lower left side near the center of the camera. In the conventional camera of Fig. 1(a), furthermore, a capacitor 14 is accommodated under the flashlight unit 12, and dry cells 15 are contained in the bottom of the camera in the lengthwise direction thereof.

These cameras, however, have defects with regard to their operability.

Namely, since the shutter release button 13 is located on the lower left side as viewed from the front side of the camera, the photographer must hold the camera by the forefinger from the front side of the camera and by the thumb from the back side thereof; i.e., the camera is not held stably.

Further, the photographic lens 11 is located at the right end as viewed from the front side of the camera though it may be provided in a protruded portion. Therefore, the photographer holding the camera with the fingers of his both hands is liable to cover the photographic lens 11 with the fingers of his left hand.

Also, if the photographer depresses the shutter release button 13 with his middle finger while firmly holding the camera, the flashlight unit 12 may be covered by the forefinger, resulting in lack of exposure.

When the camera is vertically held, furthermore, the operability is lost and the photographic lens 11 is subject to be covered by the fingers. When the picture is to be taken by vertically holding the camera, the flashlight unit 12 must be located on the upper side. This is because, if a human face is photographed being illuminated from the lower side, it is difficult to take natural expression since the face is unnaturally illuminated. Generally, therefore, the light is emitted from the upper direction. If the conventional camera of Fig. 1(a) is held in such a manner that the flashlight unit 12 is positioned on the upper side, the view finder 16 comes to the lowermost position and the camera is located above the photographer's eye as a whole. Therefore, the photographer finds his right hand cramped and, at the same time, the photographic lens 11 is very likely to be covered by his left hand.

The object of this invention therefore is to provide a disc camera which is free from all the defects inherent in the conventional cameras, i.e., which is free from:

(1) The camera is apt to be held unstably when it is held only between the photographer's fingers;

(2) The photographic lens is likely to be covered by hand since it is located at the right end portion of the camera;

(3) The flashlight unit is liable to be covered by hand since the camera is not held in an ideal manner; and

(4) It is difficult to manipulate the camera when it is vertically held, since the view finder is located at the extreme right portion of the camera and the flashlight unit is located at the extreme left portion of the camera.

Another object of this invention is to provide a disc camera in which a cartridge pocket for accommodating the disc film cartridge is located on the left side of the camera as viewed from the front of the camera so that the exposure window is allowed to be located at the right end, and the flashlight unit and the capacitor for flashing are arrayed on the right side of the cartridge pocket parallel to the pocket on a plane.

That is, according to this invention, the photographic lens is located nearly at the center of the camera in contrast with the conventional disc cameras in which the photographic lens is located at the extreme right portion. Moreover, the flashlight unit is located on the right side as viewed from the front of the camera. Thus, the camera of the invention possesses advantage of the existing small cameras which feature good operability using 35 mm films, and advantage of a thin disc camera, while eliminating all of the above-mentioned four defects inherent in the conventional disc cameras.

Further objects and features of the present invention will become obvious from the following description taken in conjunction with the accompanying drawings.

Figs. 1(a) and 1(b) are front views illustrating the construction and arrangement of conventional disc cameras;

Figs. 2 and 3 are front views illustrating the construction and arrangement of a camera according to an embodiment of this invention;

Figs. 4(a), 4(b) and 4(c) are front views showing the state in which the flashlight unit is popping out of the camera according to the embodiment of this invention;

Figs. 5(a) and 5(b) are front views of the camera of this invention of the type in which the outer cover splits open toward the right and left sides, and in which the outer cover is opened so that the picture can be taken; and

Fig. 6 is a sectional view of the camera of Fig. 5.

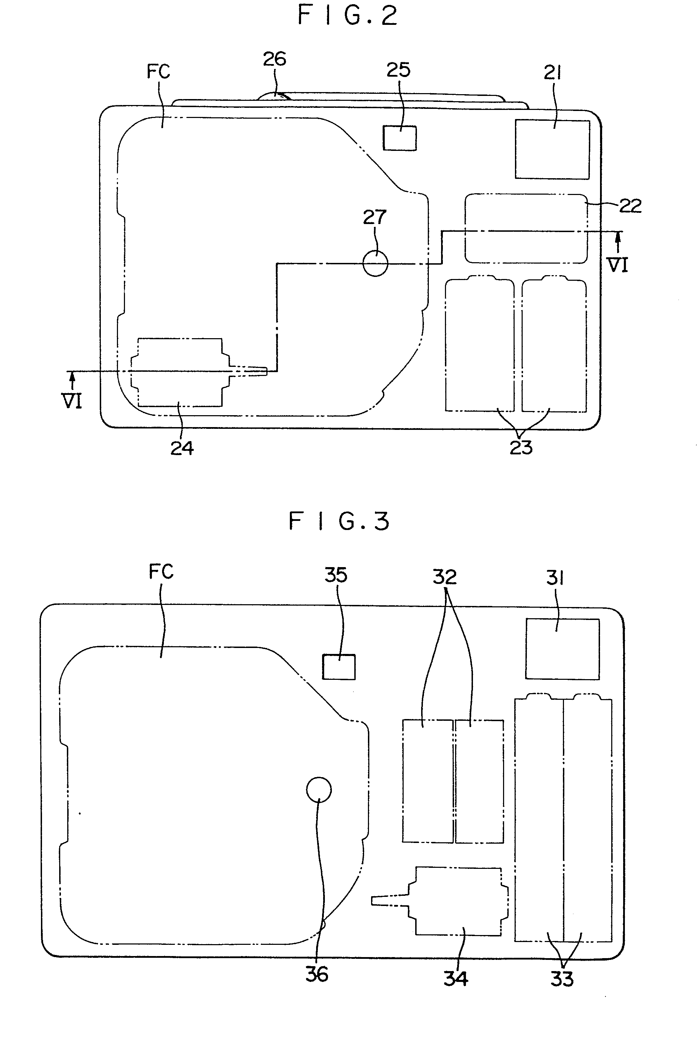

Fig. 2 illustrates the construction and arrangement of a first embodiment of this invention. A pocket for accommodating the disc film cartridge FC is located on the left side of the camera as viewed from the front of the camera, and a flashlight unit 21 and a capacitor 22 for flashing are arranged on the right side of the pocket for accommodating the disc film cartridge FC in parallel therewith in a plane. Here, the flashlight unit 21 is located at the right upper end, and is so constructed as can be popped out when a picture is to be taken, as will be mentioned later. The capacitor 22 for flashing is provided under the flashlight unit 21, and two cells 23 that serve as a power supply are contained under the capacitor 22 for flashing. A motor 24 for driving the film has a reduced thickness, and is located at the lower left portion in front of the pocket for accommodating the film cartridge FC, as viewed from the front of the camera. A view finder 25 is located at the upper central portion, a shutter release button 26 is located on the upper surface of the camera, and a photographic lens 27 is located near the central portion of the camera as viewed from the front of the camera. The camera of the invention having a reduced depth achieves the objects as contemplated by the invention.

In this embodiment, only the motor 24 is disposed being overlapped on the film cartridge chamber. Other major parts, i.e., flashlight unit 21, capacitor 22 for flashing, and cells 23 are arranged in parallel with the cartridge pocket. Therefore, the camera can be constructed in a small size featuring reduced depth and, particularly, reduced width.

Fig. 3 illustrates the construction and arrangement according to the second embodiment, in which the pocket for accommodating the disc film cartridge FC is located on the left side of the camera as viewed from the front of the camera, and the flashlight unit 31 and the capacitor 32 for flashing are arrayed on the right side of the pocket for accommodating the disc film cartridge FC in parallel therewith in a plane. Here, the flashlight unit 31 is located at the upper right end and is so constructed that it can be popped out when a picture is to be taken, as will be mentioned later. Two cells 33 that serve as a power supply are disposed in parallel under the flashlight unit 31, the capacitor 32 for flashing, which is divided into two, is provided between the cells 33 and the pocket which accommodates the film cartridge FC, and the drive motor 34 is provided under the capacitor 32 for flashing. The view finder 35 is located at the upper central portion of the camera, and the photographic lens 36 is located near the central portion as viewed from the front of the camera.

According to this embodiment in which the major parts are arranged as mentioned above, the depth of the camera can be minimized.

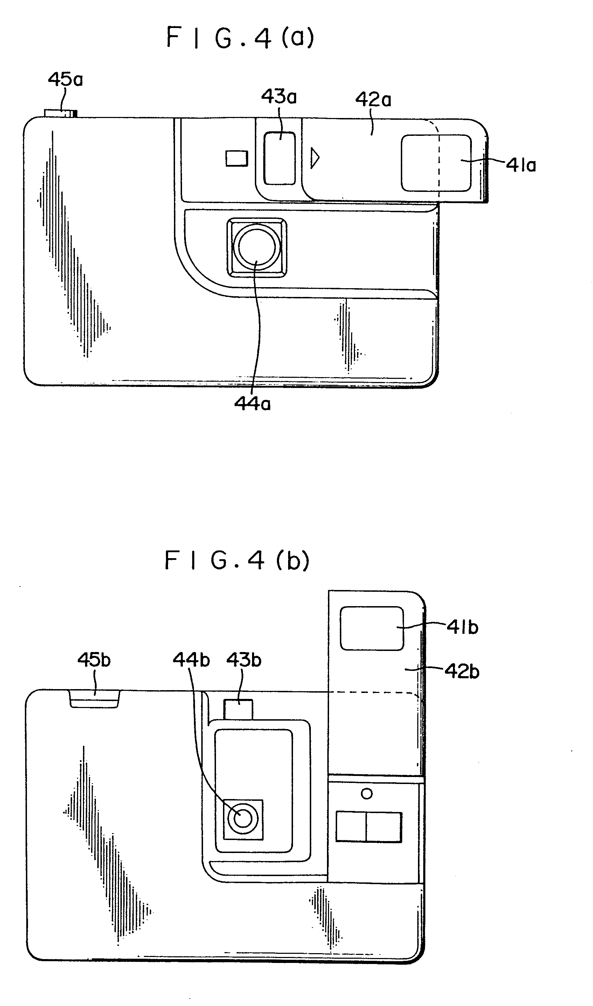

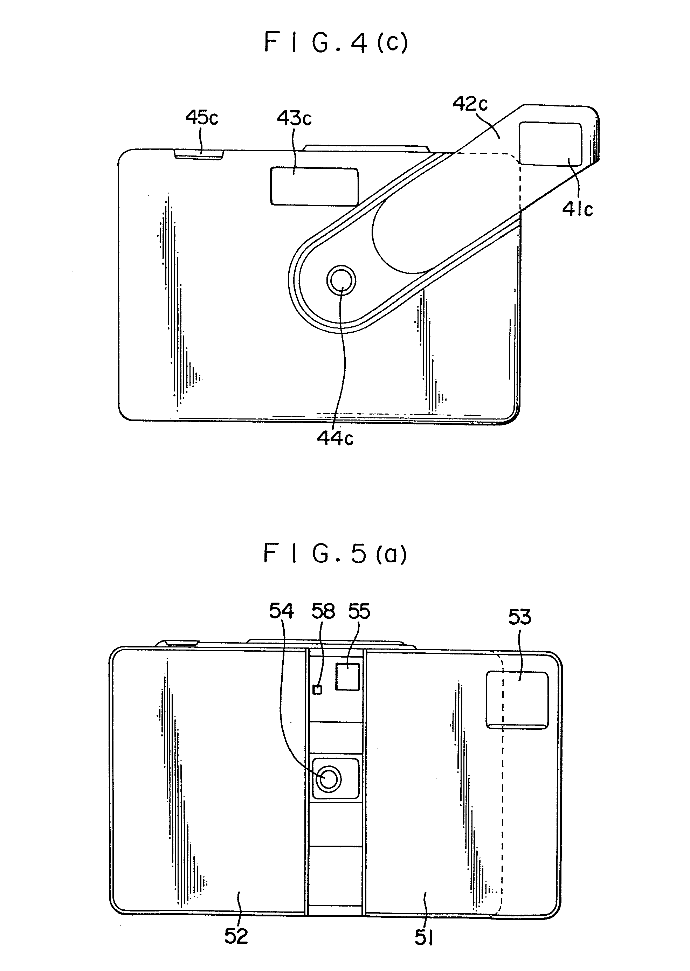

Figs. 4(a), 4(b) and 4(c) illustrate embodiments in which a flashlight unit 41 can be moved. That is, Figs. 4(a), 4(b) and 4(c) are front views of when the flashlight unit 41 is popped out. The internal arrangement of the camera is the same as that of Fig. 2 or 3.

Fig. 4(a) shows an embodiment in which a flashlight unit 41a provided in a holding member 42a can be horizontaly protruded toward the right. When the flashlight unit 41a is retracted, the view finder 43a is covered by the holding member 42a in which the flashlight unit 41a is provided. Reference numeral 44a denotes a photographic lens, and 45a denotes a shutter release button.

Fig. 4(b) shows an embodiment in which a flashlight unit 41b provided in a holding member 42b can be upwardly protruded in a vertical direction. In Fig. 4(b), reference numeral 43b denotes a view finder, 44b denotes a photographic lens, and 45b denotes a shutter release button.

Fig. 4(c) shows an embodiment in which a flashlight unit 41c provided in a holding member 42c can be protruded slantly. When the flashlight unit 41c is retracted, the photographic lens 44c is covered by the holding member 42c. Namely, the holding member 42c also works to protect the photographic lens. With the flashlight unit 41c being retracted, furthermore, the shutter release button 45c does not work even when it is depressed. Reference numeral 43c denotes a view finder.

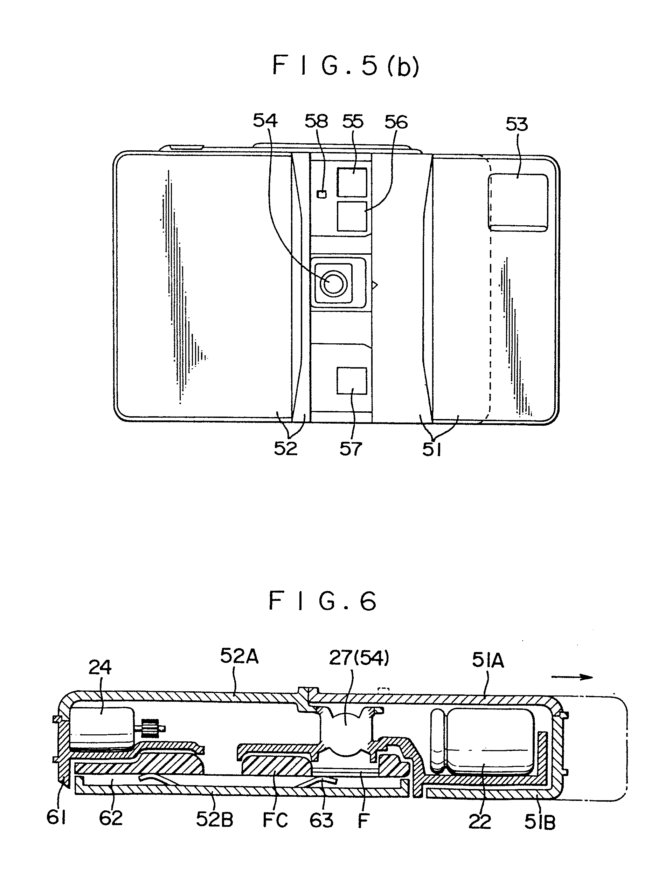

Figs. 5(a) and 5(b) are front views of cameras having outer covers 51, 52 that can be split into two nearly at the central portion thereof. A flashlight unit 53 is provided in the outer cover 51 of the right side as viewed from the front of the camera, and the outer cover 51 of the right side is allowed to move between a position to cover the photographic lens 54 and a position to expose the photographic lens 54. The internal arrangement of the camera is the same as that of the embodiment of Fig. 2 or 3.

Fig. 5(a) shows an embodiment in which a photographic lens 54 and a view finder 55 are provided in an exposure portion that is formed when the outer cover 51 of the right side is rightwardly moved to take a picture.

Fig. 5(b) shows an embodiment in which a light-emitting portion 56 and a light-receiving portion 57 for automatic focusing are provided in the exposure portion that is formed in the same manner as in Fig. 5(a).

In the embodiment shown in Fig. 5, the outer cover also works as a holding member for holding the flashlight unit. When the camera is covered by the covers, the flashlight unit does not protrude. When the outer covers are opened toward the right and left sides in order to take a picture, the flashlight unit is also protruded.

Fig. 6 is a sectional view of the camera which has outer covers of Fig. 5 and internal arrangement of the camera of Fig. 2. That is, Fig. 6 is a sectional view along the line VI - VI of Fig. 2. A camera body 61 contains a photographic lens 27 and a cartridge pocket 62 for accommodating the disc film cartridge FC. The body 61 further contains the capacitor 22 for flashing on the right side of the cartridge pocket 62, and the drive motor 24 of a reduced thickness above the cartridge pocket 62.

The fixed outer cover of the camera is divided into a fixed front cover 52A and a back cover 52B, and the outer cover of the moving side is divided into a movable front cover 51A and a movable back cover 51B. The back cover 52B is provided with a leaf spring 63 which holds the film cartridge FC in the cartridge pocket 62 in position. The disc film F is positioned in the opening of the film cartridge FC. On the disc film F, a picture is photographed one frame by one frame through the photographic lens 27. The movable front cover 51A and the movable back cover 51B are formed as a unitary structure, and can be drawn to a position indicated by a dot-dash line to take a picture. The flashlight unit 53 is provided at a corner portion in the movable front cover 51A.

According to this embodiment, the outer cover of the camera is split into two nearly at the central portion of the camera. Therefore, the lens 54, view finder 55 and light-receiving window 58 for automatic exposure can be arrayed in a concentrated manner in a portion that is exposed when the cover 51 is opened. These members are concealed when the cover 51 is closed. Therefore, the camera can be carried very conveniently. Moreover, since the flashlight unit 53 is provided in the cover 51, a so-called red-eye phenomenon does not occur when a picture is taken with a flashlight.

Furthermore, the outer cover of the camera is divided into two nearly equally, and the cover of one side is allowed to be opened and closed with very good operability. This is the advantage obtained for the first time when the film cartridge pocket is disposed at the left end of the camera.

Effects of the Invention

In the foregoing was described the disc camera according to this invention which has a reduced depth and which features excellent operability. The camera according to this invention is free from all of the defects inherent in the conventional disc cameras. The camera of the invention further has advantage over the existing disc cameras with regard to electric circuits.

That is, in a conventional disc camera, a flashing voltage booster circuit which produces a voltage of as high as several hundred volts is located close to an integration circuit for controlling the operation of camera in which a current of as small as several microamperes to several milliamperes flows. Or these circuits are often formed on the same substrate. Accordingly, the circuit of small currents is subject to be affected by electric noise produced by intense electric discharge accompanying the emission of flashlight or by the charge of electricity. The results in the occurrence of trouble or erroneous operation, and presents disadvantage with regard to reliability. To guarantee the trouble requires a tremendous amount of cost.

According to this invention, on the other hand, the problem resulting from the electric noise is solved, since the flashlight unit and the capacitor for flashing are located at the extreme right portions as viewed from the front of the camera, remote from a small-current circuit which controls the operation of camera.

- 14 -

CLAIMS:

1. A disc camera in which a cartridge pocket for accommodating a disc film cartridge (FC) is disposed on the left side of the camera as viewed from the front of the camera so that an exposure window is allowed to be located at the right end as viewed from said direction, and a flashlight unit (21), (31), (41), (53) and a capacitor (22), (32) for flashing are arrayed on the right side of said cartridge pocket in parallel therewith in a plane.

2. A disc camera according to claim 1, wherein said flashlight unit (21), (31), (41), (53) is disposed at an upper right end as viewed from the front of the camera, and said capacitor (22), (32) is disposed under said flashlight unit.

3. A disc camera according to claim 2, wherein said flashlight unit (21), (31), (41), (53) is allowed to move in a horizontal direction.

4. A disc camera according to claim 2, wherein said flashlight unit (21), (31), (41), (53) is allowed to move in a vertical direction.

5. A disc camera according to claim 2, wherein said flashlight unit (21), (31), (41), (53) is allowed to move slantly.

6. A disc camera according to claim 2, wherein dry cells (23), (33) are disposed under said capacitor (22), (32).

7. A disc camera according to claim 1, wherein said capacitor (22), (32) for flashing is disposed on the right side of said cartridge pocket, said flashlight unit (21), (31), (41), (53) is disposed on the right side of said capacitor (22), (32), and dry cells (23), (33) are disposed under said flashlight unit.

8. A disc camera according to claim 2, wherein a motor (34) for driving the film is disposed at a lower left portion as viewed from the front of the camera.

9. A disc camera according to claim 2, wherein at least said flashlight unit (21), (31), (41), (53) is provided in a movable lens-protecting member (42a) which is at least capable of covering the lens (43a).

10. A disc camera according to claim 7, wherein said drive motor (34) is disposed under said capacitor (32) for flashing.

11. A disc camera according to claim 9, wherein the outer cover of the camera is divided into two (51),(52) nearly at a central portion thereof, said flashlight unit (53) is disposed in the outer cover (51) of the right side as viewed from the front of the camera,and said outer cover (51) of the right side is allowed to move between a position for covering the lens and a position for exposing the lens (54).

12. A disc camera according to claim 11, wherein a light-receiving portion (58) and/or a light-emitting portion are disposed on an exposure portion that is formed when the outer cover (51) of the right side is rightwardly moved.

115

0113089

## F I G . 1(a)

## F I G . 1(b)

215

0113089.

F I G . 2

F I G . 3

0113089

## F I G . 4 (a)

## F I G . 4 (b)

0113089

F I G. 4 (c)

F I G. 5 (a)

## F I G . 5 (b)

## F I G . 6

*04 20*

Application number

# EUROPEAN SEARCH REPORT

**European Patent Office**

EP 83 11 2663

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | RESEARCH DISCLOSURE, no. 215, March 1982, pages 87-96, no. 21538, Havant, Hampshire, GB. "Camera mechanism" * Figures 3-5 * | 1,2,8 | G 03 B 15/05<br>G 03 B 17/02 |
| Y | RESEARCH DISCLOSURE, no. 207, July 1981, page 264, no. 20702, Havant, Hampshire, GB. "Camera having a hinged cover carrying an electronic strobe flash unit" * Figure * | 1,2,9 11 | |
| A | DE-A-2 639 443 (KODAK)<br>* Figures 3-5 * | 3 | |
| A | US-A-4 174 898 (IIJIMA)<br>* Figures 1,2 * | 4 | **TECHNICAL FIELDS SEARCHED (Int. Cl. 3)**<br><br>G 03 B 15/03<br>G 03 B 15/05<br>G 03 B 19/02<br>G 03 B 17/02 |
| A | DE-A-2 938 054 (KODAK)<br>* Figure 1 * | 5 | |
| A | US-A-4 148 573 (YAMANAKA)<br>* Figure 1 * | 1 | |
| A | US-A-4 106 037 (NAKAMURA)<br>* Figure 1 * | 1 | |

The present search report has been drawn up for all claims

| Place of search | Date of completion of the search | Examiner |
|---|---|---|
| THE HAGUE | 29-03-1984 | MEES G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82